Europäisches Patentamt

European Patent Office

Office européen des brevets

(19)

(11) **EP 0 817 512 A2**

(12) **EUROPÄISCHE PATENTANMELDUNG**

(43) Veröffentlichungstag:
  **07.01.1998 Patentblatt 1998/02**

(51) Int. Cl.$^6$: **H04Q 3/64**, H04Q 3/00

(21) Anmeldenummer: 97108340.7

(22) Anmeldetag: **22.05.1997**

(84) Benannte Vertragsstaaten:
  **AT BE CH DE DK FI FR GB GR IT LI NL SE**

(30) Priorität: **28.05.1996 DE 19621403**

(71) Anmelder:
  **SIEMENS AKTIENGESELLSCHAFT**
  **80333 München (DE)**

(72) Erfinder: **Löbig, Norbert, Dr.**
  **64291 Darmstadt (DE)**

(54) **Verfahren zur Anbindung von Teilnehmern an die Kommunikationssysteme einer Mehrzahl von Netzbetreibern**

(57)   Im Zuge der Deregulierung der Telekommunikationsmärkte entstehen neben den bisherigen öffentlichen Netzbetreibern weitere konkurrierende Netzbetreiber. Somit kann der einzelne Telefonkunde eine Mehrzahl von Netzbetreibern und Diensteanbietern auswählen. Damit besteht aber das Problem, wie der einzelne Teilnehmer an die Kommunikationssysteme einer Mehrzahl von Netzbetreibern angeschlossen werden soll.Das erfindungsgemäße Verfahren schafft hier Abhilfe, indem Signalisierungsnachrichten und Sprachinformationen eines Teilnehmers transparent durch die wenigstens eine Ortsvermittlungsstelle des physikalisch zugeordneten Netzbetreibers zu dem gewünschten Netzbetreiber durchgereicht werden.

FIG 2

EP 0 817 512 A2

## Beschreibung

Die Erfindung betrifft ein Verfahren gemäß dem Oberbegriff des Patentanspruchs 1.

Mit der Deregulierung der Telekommunikationsmärkte verlieren die bisherigen öffentlichen Netzbetreiber ihre Monopolstellung insbesondere auf dem Gebiet der Telefonie.Zukünftig soll freier Wettbewerb in der Weise angestrebt werden, daß der einzelne Telefonkunde eine Mehrzahl von Netzbetreibern und Diensteanbietern auswählen kann. Somit kann jeder Telefonkunde den für sich attraktivsten Anbieter hinsichtlich Diensteumfang, Gebührenstruktur etc. auswählen.

Im Hinblick auf die Telekommunikationsinfrastruktur existieren damit mehrere öffentliche Netze nebeneinander. Dieses sind die historisch gewachsenen Netze der klassischen Netzbetreiber und die neuen Netze der alternativen (neu hinzugekommenen) Netzbetreiber. Diese konkurrierenden öffentlichen Netze bestehen jeweils aus Fern- und Ortsvermittlungsstellen und verbindenden Übertragungswegen. Hierbei können den Ortsvermittlungsstellen sogenannte Access Nodes vorgelagert sein, welche den Zugang zur Ortsvermittlungsstelle optimieren (Konzentration und Least Cost Routing bei Zugang zu mehreren öffentlichen Netzen). Ferner kann die Orts- und Fernvermittlungsstellenfunktion auch in einer kombinierten Vermittlungsstelle implementiert sein. Zwischen den verschiedenen öffentlichen Netzen sind Netzübergänge vorhanden, so daß die Erreichbarkeit der Teilnehmer eines jeden Netzes für jeden beliebigen weiteren Teilnehmer gesichert ist.

Die oben genannten Vermittlungsstellen,insbesondere die Ortsvermittlungsstellen bestehen aus peripheren Einrichtungen, die als Anschlußeinrichtungen für Teilnehmer oder Leitungen ausgebildet sind. Weiterhin sind (aus Zuverlässigkeitsgründen mindestens gedoppelte) zentrale Einrichtungen vorgesehen, sowie Einrichtungen des Koppelfeldes, Signalisierungseinrichtungen (#7), Nachrichtenverteiler, Rechnerplattform, Hintergrundspeicher, Bedieneinrichtungen. Alle diese Einrichtungen sind in der Regel softwaregesteuerte Ein- oder Mehrprozessorsysteme.

Gegenwärtig ist die überwiegende Mehrzahl der Teilnehmer noch über Teilnehmerschnittstellen an Ortsvermittlungsstellen oder diesen zugehörigen vorgelagerten Konzentratoren der klassischen Netzbetreiber angeschlossen. Die Teilnehmeranschlußleitungen sind damit in aufwendiger Weise (z. B. unterirdisch) an die Hauptverteiler der Ortsvermittlungsstellen des klassischen Netzbetreibers herangeführt.

Gemäß der in jüngerer Zeit vorgenommenen Standardisierungen nach ITU-T und ETSI (V5.1-, V5.2-Standards) werden die Teilnehmeranschlüsse in einem sogenannten Teilnehmeranschlußnetzwerk (Access Network) zusammengefaßt und verwaltet. Dieses kann von einem vom öffentlichen Netz- betreiber verschiedenen Netzbetreiber verwaltet werden. Es weist eine eigene Bedienoberfläche auf und zeichnet sich durch genormte Schnittstellen zu einem oder mehreren Ortsvermittlungsstellen aus. Organisatorisch ist für alle mit dem physikalischen Teilnehmeranschluß verbundenen Aufgaben (Verwaltung und Wartung) der Netzbetreiber des Teilnehmeranschlußnetzwerkes zuständig. Alle mit dem vermittlungstechnischen Betrieb zusammenhängenden Aufgaben (Berechtigungen, Dienste, Vermitteln, Gebühren usw.) fallen in die Verantwortung des Betreibers der Ortsvermittlungsstelle.

Die V5-Schnittstellen zwischen Teilnehmeranschlußnetzwerk und Ortsvermittlungsstelle bestehen physikalisch aus bis zu 16 PCM30 Strecken. Auf diesen braucht keine feste Zuordnung zwischen Sprachkanal der Schnittstelle und dem Teilnehmer am Teilnehmeranschlußnetzwerk zu bestehen.Will nun ein über eine V5-Schnittstelle angeschlossener Teilnehmer des klassischen Netzbetreibers Kunde eines alternativen,konkurrierenden Netzbetreibers werden, so ergibt sich das Problem, daß per Definition der V5-Schnittstelle seine Signalisierung und seine Sprachkanäle in der Ortsvermittlungsstelle des klassischen Betreibers terminiert bzw. zur Verfügung gestellt werden müssen.

Beim Stand der Technik werden die der V5-Schnittstelle zugehörigen PCM Teilnehmeranschlußleitungen am Hauptverteiler der Ortsvermittlungsstelle des bisherigen öffentlichen Netzbetreibers abgeklemmt und der Ortsvermittlungsstelle des gewünschten alternativen Netzbetreibers zugeführt. Dabei ergibt sich jedoch das Problem, daß eine derartige Vorgehensweise lediglich für die der Schnittstelle zugehörige Teilnehmergesamtheit durchgeführt werden kann, ein entsprechendes Vorgehen für einzelne Teilnehmer ist hingegen nicht möglich. Dies hat seinen Grund darin, daß gemäß den V5-Standards einer V5-Schnittstelle stets eine Teilnehmergesamtheit zugeordnet ist. Bildung von Teilgesamtheiten, welche den einzelnen Netzbetreibern zugeodnet sind, bedeutet Vermehrung der Anzahl der V5-Schnittstellen und feste und damit unflexible Dimensionierung derselben, also einen hohen Installationsaufwand .

Der Erfindung liegt die Aufgabe zugrunde, einen Weg aufzuzeigen, wie für jeden Teilnehmer eines Teilnehmeranschlußnetzwerkes der inviduell freie Zugang zu Ortsvermittlungsstellen aller alternativen Netzbetreiber technisch flexibel und ohne großen Aufwand realisiert werden kann.

Die Erfindung wird ausgehend vom Oberbegriff des Patentanspruchs 1 durch dessen kennzeichnende Merkmale gelöst.

Vorteilhaft für die Erfindung ist, daß Signalisierungsnachrichten und Sprachinformationen des vermittlungstechnisch dem weiteren (konkurrierenden) Netzbetreiber zugeordneten Teilnehmers transparent durch die wenigstens eine Ortsvermittlungsstelle des physikalisch zugeordneten Netzbetreibers durchgereicht werden. Damit ist insbesondere der Vorteil verbunden, daß keine teueren und starren Zugangswege im Bereich des Teilnehmeranschlußnetzwerkes auftreten. Weiterhin ist damit ist der Vorteil verbunden, daß keine überdimensionierten Zugangswege von den Teilnehmeranschlußnetzwerken an die Ortsvermittlungsstellen der alternativen Netzbetreiber geführt werden müssen. Darüberhinaus kann der unvorhersehbaren Marktgegebenheiten unterworfene, schwankende Zugangsbedarf zu den Ortsvermittlungsstellen der konkurrierenden Netzbetreiber auf administrativem Wege flexibel angepaßt werden.

Vorteilhafte Ausgestaltungen der Erfindung sind in den Unteransprüchen angegeben:

Gemäß Anspruch 2 ist vorgesehen, daß die genormten Schnittstellen V5-Schnittstellen, insbesondere V5.2-Schnittstellen sind. Damit ist der Vorteil verbunden, daß gerade im Falle von letzteren eine erhöhte Flexibilität im Hinblick auf Veränderungen der Kapazität der Schnittstelle, insbesondere im Falle von Erweiterungen, gegeben ist.

Gemäß Anspruch 3 ist vorgesehen, daß in der Ortsvermittlungsstelle des einen Netzbetreibers eine den Signalisierungsnachrichten mitgegebene logische Adresse daraufhin untersucht wird, ob der Teilnehmer vermittlungstechnisch dem weiteren Netzbetreiber zugeordnet ist. Damit ist der Vorteil verbunden, daß unmittelbar, ohne aufwendige interne Analyse, zu der Ortsvermittlungsstelle dieses weiteren Netzbetreibers verzweigt werden kann.

Gemäß Anspruch 4 ist vorgesehen, daß in einer Tabelle der Ortsvermittlungsstelle des einen Netzbetreibers eine Umsetzung der logischen Adresse in eine Adresse erfolgt, unter der die Signalisierungsnachrichten der genormten Schnittstelle übergeben werden, an die der weitere Netzbetreiber angeschlossen ist. Damit ist der Vorteil verbunden, daß im Teilnehmeranschlußnetzwerk und den Ortsvermittlungsstellen sich unterscheidende Adressierungsverfahren unabhängig voneinander existieren können, welche koordiniert und flexibel aneinander angepaßt werden können.

Gemäß Anspruch 5 ist vorgesehen, daß von einem Teilnehmer gesendete Paketdaten an die periphere Einrichtung geleitet werden, die den C-Kanal terminiert, welcher die Paketdaten des Teilnehmers auf der Schnittstelle zwischen der Ortsvermittlungsstelle des physikalisch zugeordneten Netzbetreibers und der Ortsvermittlungsstelle mit der vermittlungstechnischen Funktion transportiert. Damit weist das erfindungsgemäße Verfahren auch die für ISDN Teilnehmer mit Paketdatenberechtigung erforderliche Unterstützung auf.

Gemäß Anspruch 6 ist vorgesehen, daß im Falle von Ausfall-/Wiederverfügbarkeitssituationen im Teilnehmeranschlußnetzwerk oder auf der V5-Schnittstelle die Ortsvermittlungsstelle des physikalisch zugeordneten Netzbetreibers für alle betroffenen Teilnehmer auf allen für diese Teilnehmermenge relevanten V5-Schnittstellen portspezifische Ausfall-/Verfügbarkeitsmeldungen an die zugehörigen Ortsvermittlungsstelle der weiteren Netzbetreiber generiert. Im umgekehrten Falle von Ausfall/Wiederverfügbarkeit der letzteren V5-Schnittstellen generiert die physikalisch zugeordnete Ortsvermittlungsstelle ebenfalls portspezifische Ausfall/ Wiederverfügbarkeitsmeldungen an alle betroffenen Teilnehmeranschlußnetze. Damit ist der Vorteil der Vermeidung vermittlungstechnischer Blindlast verbunden.

Gemäß Anspruch 7 ist vorgesehen, daß die Mehrzahl von Teilnehmern, die physikalisch einem Netzbetreiber und vermittlungstechnisch wenigstens einem weiteren Netzbetreiber zugeordnet sind, an einer Mehrzahl von Teilnehmeranschlußnetzwerken und/oder über eine Mehrzahl von genormten Schnittstellen die Ortsvermittlungsstelle des physikalisch zugeordneten Netzbetreibers erreicht und bzgl. Signalisierungsinformation, Sprachinformation und Paketdaten einer oder mehreren genormeten Schnittstellen an der Ortsvermittlungsstelle zugeordnet ist. Damit ist der Vorteil verbunden, daß die vermittlungstechnisch dem weitern Netzbetreiber zugeordneten Teilnehmer in der Ortsvermittlungsstelle konzentriert werden können.

Gemäß Anspruch 8 ist vorgesehen, daß an der Ortsvermittlungsstelle mehrere genormte Schnittstellen zu einer Mehrzahl von Ortsvermittlungsstellen unterschiedlicher, weitere Netzbetreiber existieren. Damit ist der Vorteil verbunden, daß eine beliebige Anzahl weiterer Netzbetreiber in gleicher Weise und zur gleichen Zeit über die Ortsvermittlungsstelle angebunden werden können.

Gemäß Anspruch 9 ist vorgesehen, daß die Mehrzahl der Teilnehmer auch Teilnehmer enthält, die nicht über genormte V5-Schnittstellen an der Ortsvermittlungsstelle angeschlossen sind und deren Signalisierung und Paketdateninformation in geeigneter Weise in der Ortsvermittlungsstelle umgesetzt wird. Damit ist der Vorteil verbunden, daß auch in alter Technik z.B. über proprietäre, herstellerspezifische Schnittstellen an die Ortsvermittlungsstelle angebundene Teilnehmer den für sie vermittlungstechnisch zuständigen Netzbetreiber wählen frei können.

Gemäß Anspruch 10 ist vorgesehen, daß Signalisierung und/oder Paketdaten der Mehrzahl der Teilnehmer bereits im Teilnehmeranschlußnetzwerk auf feste, nur für die vermittlungstechnisch dem weiteren Netzbetreiber zugeordneten Teilnehmer reservierte C-Kanäle geleitet werden, die via internem Nachrichtenverteilsystem der Ortsvermittlungsstelle oder via Sprachkanaldurchschaltung durch die Ortsvermittlungsstelle als Gesamtheit auf einen C-Kanal der V5-Schnittstelle geschaltet werden. Damit ist der Vorteil verbunden, daß die Auswertung der logischen Adressen in der Ortsvermittlungsstelle entfällt.

Gemäß Anspruch 11 ist vorgesehen, daß die Ortsvermittlungsstelle eine Verkehrsmessung im Sinne einer Zählung von Anzahl und/oder Dauer von Sprachkanaldurchschaltungen und/oder Anzahl und Länge übertragener Paketdaten und/oder Signalisierungsnachrichten zwischen der Mehrzahl der Teilnehmer und dem weiteren Netzbetreiber durchführt als Basis zur Kostenabrechnung zwischen den Netzbetreibern.Damit kann der Netzbetreiber mit dem weiteren Netzbetreiber die Nutzung der Resourcen der Ortsvermittlungsstelle belegen und angemessenes Entgelt einfordern.

Gemäß Anspruch 12 ist vorgesehen, daß die Tabelle der Ortsvermittlungsstelle dahingehend durch Bedienereingriff administriert werden kann, daß ein Teilnehmer wechselweise vermittlungstechnisch dem Netzbetreiber oder einem der weiteren Netzbetreiber zugeordnet werden kann, wobei in letzterem Falle die Schnittstelle, sowie die zugeordneten C-Kanäle und die auf der Schnittstelle gültige logische Adresse frei zugeordnet werden können. Damit ist der Vorteil verbunden, daß der Teilnehmer durch reine Bedienaktionen und damit bei Bedarf auch kurzfristig den für ihn vermittlungstechnisch zuständigen Netzbetreiber wechseln kann. Umverdrahtungen oder sonstiger Installationsaufwand sind damit nicht erforderlich.

Die Erfindung wird im folgenden anhand eines Ausführungsbeispiels näher erläutert.

Es zeigen:

Figur 1    die typische Systemarchitektur eines Kommunikationssystems wie z.B einer Ortsvermittlungsstelle,

Figur 2    eine Konfiguration, auf der das erfindungsgemäße Verfahren zum Ablauf gelangt,

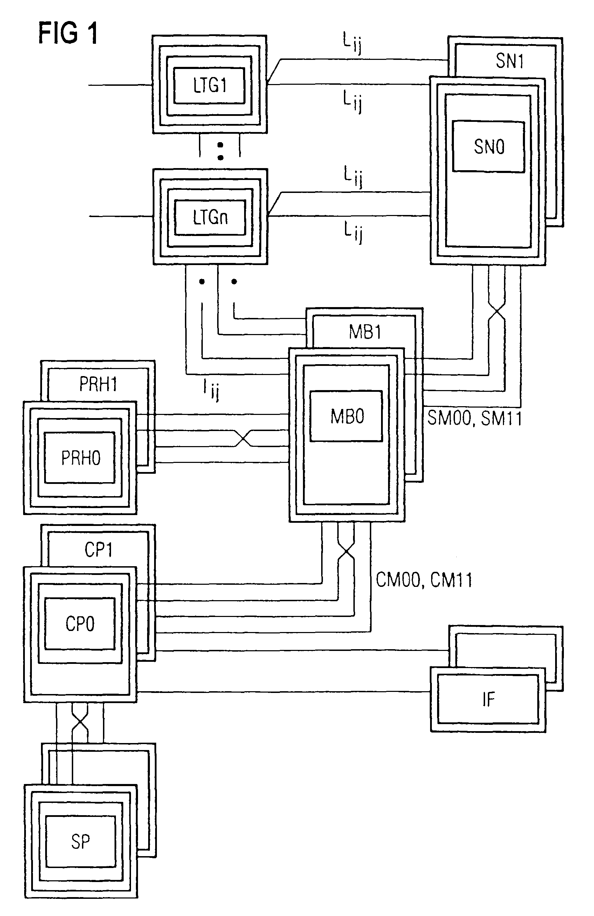

Fig. 1 zeigt die typische Systemarchitektur eines Kommunikationssystems mit ungedoppelten peripheren Einrichtungen $LTG_1$ ...$LTG_n$. Sie sind ausgangsseitig mit Teilnehmern oder Teilnehmeranschlußnetzwerken bzw. weiteren Kommunikationssystemen verbunden;die von diesen ausgehenden Informationen werden von den peripheren Einrichtungen $LTG_1$...$LTG_n$ empfangen und über Verbindungen Lij dem redundant ausgebildeten Koppelfeld SN0, SN1 zugeführt. Weiterhin sind die peripheren Einrichtungen $LTG_1$....$LTG_n$ über weitere Verbindungen lij mit den redundant ausgebildeten Nachrichtenverteilereinheiten MB0, MB1 verbunden, die ihrerseits über weitere Verbindungen lij zum einen mit den redundant ausgebildeten Einrichtungen zur Behandlung zentraler Protokollabschlußaufgaben PRH (z.B. zentraler Zeichenkanal für No.7 Signalisierung, Zugang zu Paketnetzen) und zum anderen mit dem Koppelfeld SN0, SN1 sowie mit der ebenfalls redundant ausgebildeten zentralen Steuereinrichtung CP0, CP1 verbunden sind. Letztere ist an einen gedoppelten Massenspeicher SP angeschlossen. Im weiteren sind an die zentrale Steuereinrichtung CP0, CP1 Interface-Einheiten IF zur Anschaltung von Bedienungselementen bzw. zur Alarmierung des Wartungspersonals vorgesehen. Das Koppelfeld SN0, SN1, die Nachrichtenverteilereinheiten MB0, MB1, die Einrichtungen zur Behandlung zentraler Protokollabschlußaufgaben PRH0, PRH1, die zentrale Steuereinrichtung CP0, CP1 sowie die Massenspeicher SP und die Interface-Einheiten IF sind somit im Kommunikationssystem jeweils gedoppelt vorgesehen. Die peripheren Einrichtungen $LTG_1$...$LTG_n$ hingegen sind bei vorliegendem Ausführungsbeispiel ungedoppelt ausgeführt.

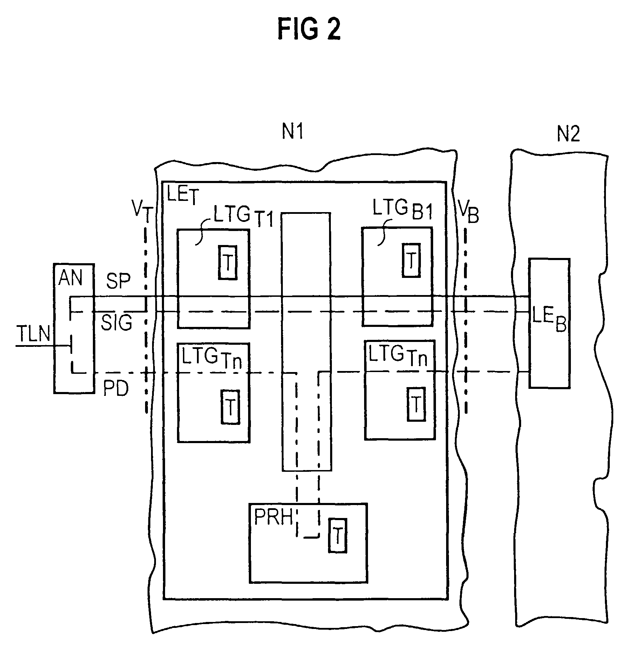

In Fig. 2 ist eine Konfiguration aufgezeigt, auf der das erfindungsgemäße Verfahren zum Ablauf gelangt. Hier ist eine Ortsvermittlungsstelle $LE_T$ eines ersten Netzbetreibers N1 offenbart. Der Übersichtlichkeit halber ist lediglich diese eine Ortsvermittlungsstelle aufgezeigt, obwohl das gesamte Netz, für das der Netzbetreiber N1 verantwortlich ist, eine Vielzahl derartiger Ortsvermittlungsstellen sowie weiterer Vermittlungsstellen, wie z.B. Fernvermittlungsstellen aufweist. Der Ortsvermittlungsstelle $LE_T$ werden die Teilnehmer TLN physikalisch zugeordnet, indem diese über ein Teilnehmeranschlußnetzwerk AN an die Ortsvermittlungsstelle $LE_T$ herangeführt werden.Die Schnittstelle zwischen Teilnehmeranschlußnetzwerk AN und Ortsvermittlungsstelle $LE_T$ ist eine V5-Schnittstelle $V_T$.

Weiterhin ist Fig. 2 ein zweiter Netzbetreiber N2 entnehmbar, der erfindungsgemäß über eine weitere V5-Schnittstelle $V_B$ an die Ortsvermittlungsstelle $LE_T$ angeschlossen ist. Weitere Netzbetreiber, die gemäß Fig. 2 nicht aufgezeigt sind, können über weitere V5-Schnittstellen angeschlossen werden. Als V5-Schnittstellen werden V5.1- bzw. V5.2-Schnittstellen verwendet, wobei vorzugsweise die flexibel ausbaubaren V5.2-Schnittstellen Verwendung finden sollen. Die besondere Funktionalität der V5-Schnittstellen $V_B$ muß in den Ortsvermittlungsstellen $LE_T$ softwaremäßig berücksichtigt werden. Für die V5-Schnittstelle $V_B$ liegt die dem Teilnehmeranschlußnetzwerk zugehörige Funktionalität im $LE_T$. Die Teilnehmer TLN, welche von dem Netzbetreiber N2 bedient werden wollen, bleiben dem Teilnehmeranschlußnetzwerk AN mit der V5-Schnittstelle $V_T$ zum $LE_T$ physikalisch zugeordnet. Dies bedeutet, daß bestehende V5-Schnittstellen $V_T$ weiterhin benutzt werden können. Letztendlich sind also jene Teilnehmer TLN, welche von dem Netzbetreiber N2 bedient werden wollen, physikalisch dem Netzbetreiber N1 und vermittlungstechnisch dem Netzbetreiber N2 zugeordnet.

Im folgenden sei davon ausgegangen, daß einer der Teilnehmer TLN, der obige Voraussetzungen erfüllt, mit einem anderen Teilnehmer kommunizieren möchte.Der Teilnehmer TLN ist direkt über die zuständige V5-Schnittstelle $V_T$ an die Ortsvermittlungsstelle $LE_T$ des Netzbetreibers N1 physikalisch angebunden. Da er in vermittlungstechnischer Hinsicht dem Netzbetreiber N2 zugeordnet ist, stellt dieser die notwendigen vermittlungstechnischen Funktionen und Dienste (features) in der betreffenden Ortsvermittlungsstelle $LE_B$ bereit. Der besseren Übersichtlichkeit halber seien die peripheren Einrichtungen $LTG_1$...$LTG_n$ als teilnehmerseitige periphere Einrichtungen $LTG_{T1}$...$LTG_{Tn}$ und als betreiberseitigeperiphere Einrichtungen $LTG_{B1}$...$LTG_{Bn}$ bezeichnet.

Die vom Teilnehmer TLN ausgehenden Signalisierungsnachrichten SIG werden nun in einer der peripheren Einrichtungen $LTG_{T1}$ der Ortsvermittlungsstelle $LE_T$ anhand einer auf der Schnittstelle $V_T$ gültigen, logischen Adresse erkannt. Diese korrespondiert mit der Portadresse, mit der der Teilnehmer TLN am Teilnehmerzugangsnetz AN angeschlossen ist. Diese logische Adresse wird in einer in der peripheren Einrichtung $LTG_{T1}$ vorhandenen Tabelle T der Ortsvermittlungsstelle $LE_T$ ausgewertet. Als Ergebnis dieser Auswertung wird ermittelt, ob der Teilnehmer TLN vermittlungstechnisch dem Netzbetreiber N1 zugeordnet ist. Ist dies der Fall, so kann der Verbindungsaufbau innerhalb des Netzes N1 zu dem in Frage kommenden weiteren Teilnehmer erfolgen. Wird jedoch ermittelt, daß der Teilnehmer TLN vermittlungstechnisch dem Netzbetreiber N2 zugeordnet ist, so muß eine Verzweigung zu diesem Netzbetreiber N2 hin erfolgen. Die hierzu erforderlichen Adressierungsdaten werden ebenfalls der Tabelle T entnommen. Darin ist festgehalten, über welche V5-Schnittstelle und über welchen C-Kanal bzw. über welche periphere Einrichtung $LTG_{B1}$ der Ortsvermittlungsstelle $LE_T$ die Signalisierungsnachrichten SIG über das interne Nachrichtenverteilsystem in Richtung Ortsvermittlungsstelle $LE_B$ des Netzbetreibers N2 weitergeleitet werden sollen. Ferner ist in der Tabelle T festgehalten, mit welcher logischen, auf der Schnittstelle $V_B$ gültigen Adresse die Nachricht SIG zum $LE_B$ weitergeleitet werden muß. Bei den logischen Adressen handelt es sich bei vorliegendem Ausführungsbeispiel um die gemäß V5-Standard definierten Envelope Function Addresses/Layer 3 Addresses.

Im folgenden werden nun Signalisierungsnachrichten von der Ortsvermittlungsstelle $LE_B$ zu dem betreffenden Teilnehmer TLN hin gesendet. Diese müssen in der peripheren Einrichtung $LTG_{B1}$ erkannt werden, um sie durch die Ortsvermittlungsstelle $LE_T$ des Netzbetreibers N1 transparent zum Teilnehmer TLN übertragen zu können. Auch hier sind die Signalisierungsnachrichten mit einer auf der Schnittstelle $V_B$ gültigen, logischen Adresse versehen, die mit Hilfe der in der peripheren Einrichtung $LTG_{B1}$ ebenfalls vorhandenen Tabelle T der Ortsvermittlungsstelle $LE_T$ ausgewertet wird. Als Ergebnis dieser Auswertung wird dann ermittelt, über welche V5-Schnittstelle, welchen C-Kanal und damit welche periphere Einrichtung die Signalisierungsnachrichten SIG geleitet werden sollen. In vorliegendem Ausführungsbeispiel soll dies die peripheren Einrichtungen $LTG_{T1}$ sein. Ausgehend von dieser peripheren Einrichtung werden werden nun die Signalisierungsnachrichten, versehen mit der auf der Schnittstelle $V_T$ gültigen, über die V5-Schnittstelle $V_T$ dem Teilnehmer TLN zugeführt. Bei einer derartigen Vorgehensweise wird vom Netzbetreiber N2 nicht erkannt, daß der Teilnehmer TLN physikalisch nicht an einem physikalisch existierenden Teilnehmeranschlußnetzwerk angeschlossen ist, welches via V5-Schnittstelle direkt an der Ortsvermittlungsstelle $LE_B$ angeschlossen ist.

Falls als V5-Schnittstelle $V_T$ eine (konzentrierende) V5.2-Schnittstelle verwendet wird, sind Durchschalteaufträge für die Sprachinformationen (Nutzkänale) erforderlich. Zu diesem Zweck muß von der Ortsvermittlungsstelle $LE_T$ die Zuordnung eines Sprachkanals zum Teilnehmer TLN gesteuert werden. Dabei wird ein beliebiger freier Sprachkanal der Schnittstelle $V_T$ dem Teilnehmer für die Dauer einer Verbindung zugeordnet. Weiterhin erfolgt im Teilnehmeranschlußnetzwerk AN eine temporäre Durchschaltung des Teilnehmers auf den zugeordneten Sprachkanal der V5.2-Schnittstelle. Falls als V5-Schnittstelle $V_T$ eine (nicht konzentrierende) V5.1-Schnittstelle verwendet wird, ist der Teilnehmer TLN hinsichtlich aller B-Kanäle fest auf gewisse Sprachkanäle der V5.1-Schnittstelle durchgeschaltet. Eine Steuerung der Durchschaltung zwischen Teilnehmer und Sprachkanal der Schnittstelle ist für die V5.1-Schnittstelle nicht erforderlich.

In einer speziellen Ausgestaltung der Erfindung können noch allgemeiner als V5-Schnittstellen $V_T$, $V_B$ wahlweise V5.1- oder V5.2-Schnittstellen verwendet werden. Damit sind dann 4 verschiedene Fälle zu unterscheiden:

$$V_T = V5.2; V_B = V5.2 \qquad\qquad 1.$$

In diesem Fall wird von der Ortsvermittlungsstelle $LE_B$ die Zuordnung des Teilnehmers TLN zu einem Sprachkanal der V5.2-Schnittstelle $V_B$ über das BCC Protocol angefordert. Daraufhin wird von der Ortsvermittlungsstelle $LE_T$ eine Durchschaltung dieses Sprachkanales auf einen freien Sprachkanal der V5.2-Schnittstelle $V_T$ vorgenommen und die weitere Durchschaltung dieses Sprachkanals zum Teilnehmer TLN vom Teilnehmeranschlußnetzwerk AN angefordert. Hierbei ist wiederum der Zugriff auf die Tabelle T zur Umsetzung der jeweils gültigen logischen Adresse erforderlich. Im Mißerfolgsfalle erfolgt die Rückweisung des Durchschalteauftrages der Ortsvermittlungsstelle $LE_B$ durch das $LE_T$. Fordert die Ortsvermittlungsstelle $LE_B$ die Freigabe eines dem Teilnehmer TLN zugeordneten Sprachkanals über das BCC Protocol an, so hebt die Ortsvermittlungsstelle $LE_T$ die vorhandene Durchschaltung dieses Sprachkanales auf einen Sprachkanal der V5.2-Schnittstelle $V_T$ auf und fordert die Freigabe des dem Teilnehmer TLN zugeordneten Sprachkanales der Schnittstelle $V_T$ vom Teilnehmeranschlußnetzwerk AN an. Hierbei ist wiederum der Zugriff auf die Tabelle T zur Umsetzung der jeweils gültigen logischen Adresse in der Ortsvermittlungsstelle $LE_T$ erforderlich.

$$V_T = V5.2; V_B = V5.1 \qquad\qquad 2.$$

Hier können die Sprachkanäle des Teilnehmers TLN fest über das Teilnehmeranschlußnetzwerk AN und die Ortsvermittlungsstelle $LE_T$ auf die Kanäle der V5-Schnittstelle $V_T$ durchgeschaltet sein ( Nailed up connections im $LE_T$ , preconnected bearer channels im AN). Dieses Vorgehen besitzt den Nachteil eines eventuell unzulässigen Sprachkanalverbrauchs auf der V5-Schnittstelle $V_T$. Alternativ kann jedoch ebenfalls die wesentlich günstigere, dynamische Durchschaltung durch das Teilnehmerzugangsnetz AN und die Ortsvermittlungsstelle $LE_T$ realisiert werden. Hierbei besteht die wesentliche Schwierigkeit darin, daß von der Ortsvermittlungsstelle $LE_B$ dem Teilnehmerzugangsnetz AN sowie der Ortsvermittlungsstelle $LE_T$ beim Verbindungsauf- und Verbindungsabbau keine Zuordnungsaufträge für den Sprachkanal gegeben werden. Damit muß die Ortsvermittlungsstelle $LE_T$ durch Auswertung der zwischen dem Teilnehmerzugangsnetz AN und Ortsvermittlungsstelle $LE_B$ übertragenen Signalisierungsinformation selbst entscheiden, wann ein Sprachkanal auf der V5-Schnittstelle $V_T$ zuzuordnen ist und wann der zugeordnete Sprachkanal wieder freizugeben ist. Dieses Problem kann nun in folgender Weise gelöst werden:

Die Ortsvermittlungsstelle $LE_T$ wertet die für den Teilnehmer TLN relevanten, zwischen dem Teilnehmerzugangsnetz AN und der Ortsvermittlungsstelle $LE_B$ zu übertragenden Nachrichten aus. Wird für einen analogen Teilnehmer TLN das PSTN Protocol Nachrichtenelement 'Establish Request' übertragen, so veranlaßt die Ortsvermittlungsstelle $LE_T$ die Durchschaltung dieses Teilnehmers im Teilnehmerzugangsnetz AN und in der Ortsvermittlungsstelle $LE_T$ auf den dem Teilnehmer TLN auf der V5-Schnittstelle $V_T$ fest zugeordneten Sprachkanal und reicht erst nach erfolgreicher Sprachkanaldurchschaltung das PSTN Nachrichtenelement 'Establish Request' weiter. Kann der analoge Teilnehmer TLN nicht erfolgreich auf den ihm vorgegebenen Sprachkanal der V5-Schnittstelle $V_T$ geschaltet werden, so wird das Nachrichtenelement 'Establish Request' in der Ortsvermittlungsstelle $LE_B$ verworfen, was gegebenenfalls zur Auftragswiederholung und in der Folge eventuell zu erfolgreicher Durchschaltung des Sprachkanals zwischen dem Teilnehmerzugangsnetz AN und der Ortsvermittlungsstelle $LE_T$ führen kann.

Wird nach erfolgreicher Durchschaltung des Spachkanals im Teilnehmerzugangsnetz AN und der Ortsvermittlungsstelle $LE_T$ für den analogen Teilnehmer TLN in der Ortsvermittlungsstelle $LE_T$ das PSTN Protocol Nachrichtenelement 'Disconnect' empfangen, welches im Rahmen des Verbindungsabbaus ausgebracht wird, so wird der dem Teilnehmer TLN auf der V5-Schnittstelle $V_T$ zugeordnete Sprachkanal freigegeben und die Sprachkanaldurchschaltung in der Ortsvermittlungsstelle $LE_T$ ausgelöst.

Für einen ISDN Teilnehmer TLN werden alle ihm verfügbaren B-Kanäle dann im Teilnehmeranschlußnetzwerk AN und der Ortsvermittlungsstelle $LE_T$ auf die V5-Schnittstelle $V_T$ durchgeschaltet, falls eine erste Schicht 2 für die zugehörige Envelope Function Address (EFA) zu Signalisierungszwecken aufgebaut wird (Nachricht SABME im V5-C-Kanal mit der D-Kanal-Signalisierung des Teilnehmers TLN). Falls die letzte Schicht 2 (Nachricht DISC, Schicht 2 Ausfall) abgebaut wird, wird die Durchschaltung dieser B-Kanäle wieder aufgehoben. Als noch einfachere, aber gröbere Lösung steht die Aktivierung und die Deaktivierung der Schicht 1 des Teilnehmers TLN via V5 Port Control Protocol zur Durchschaltung und Freigabe der B-Kanäle zur Verfügung. Dann allerdings würden auch bei D-Kanal-Paketverbindungen die B-Kanäle des Teilnehmer TLN im Teilnehmerzugangsnetz AN und der Ortsvermittlungsstelle $LE_T$ durchgeschaltet, obwohl sie nicht gebraucht werden.

Eine feste Durchschaltung eines B-Kanales des Teilnehmers TLN auf ein festes Ziel (NUCs) wird in der Ortsvermittlungsstelle $LE_B$ administrativ eingerichtet und steht permanent zur Verfügung. Da für diese Verbindungsart keine Signalisierung notwendig ist, muß die Ortsvermittlungsstelle $LE_T$ insbesondere im Falle eines analogen Teilnehmers TLN via Bedienerschnittstelle Kenntnis erhalten, so daß sie die Durchschaltung eines NUC Sprachkanals des Teilnehmers TLN auf die V5-Schnittstelle $V_T$ dauerhaft unterstüzen kann. In jedem Falle ist auch hier wiederum der Zugriff auf die Tabelle T zur entsprechenden Umsetzung der jeweils gültigen logischen Adresse in der Ortsvermittlungsstelle $LE_T$ erforderlich.

$$V_T = V5.1 \; ; \; V_B = V5.2 \qquad\qquad 3.$$

Fordert die Ortsvermittlungsstelle $LE_B$ die Zuordnung des Teilnehmers TLN zu einem Sprachkanal der V5-Schnittstelle über das BCC Protocol an, so nimmt die Ortsvermittlungsstelle $LE_T$ eine Durchschaltung dieses Sprachkanals auf den dem Teilnehmer TLN auf der V5-Schnittstelle $V_T$ zugeordneten Sprachkanal vor. Hierbei ist wiederum der Zugriff auf die Tabelle T zur Umsetzung der logischen Adresse in der Orts-vermittlungsstelle $LE_T$ erforderlich. Im Mißerfolgsfalle erfolgt die Rückverweisung des Durchschalteauftrags der Ortsvermittlungsstelle $LE_B$ durch die Ortsvermittlungsstelle $LE_T$. Fordert die Ortsvermittlungsstelle $LE_B$ die Freigabe eines dem Teilnehmer TLN zugeordneten Sprachkanals der V5-Schnittstelle $V_B$ über das BCC Protocol an, so hebt die Ortsvermittlungsstelle $LE_T$ die vorhandene Durchschaltung des dem Teilnehmer TLN zugeordneten Sprachkanales der V5-Schnittstelle $V_T$ auf. Hierbei ist wiederum der Zugriff auf die Tabelle T zur Umsetzung der logischen Adresse in der Ortsvermittlungsstelle $LE_T$ erforderlich.

$$V_T = V5.1; \; V_B = V5.1 \qquad\qquad 4.$$

Die Sprachkanäle des Teilnehmers TLN können fest über das Teilnehmerzugangsnetz AN und die Ortsvermittlungsstelle $LE_T$ auf die Kanäle der V5-Schnittstelle $V_B$ durchgeschaltet sein. (Nailed up connections in der Ortsvermittlungsstelle $LE_T$). Dieses Vorgehen besitzt den Nachteil des eventuell unzulässigen Sprachkanalverbrauchs auf internen Schnittstellen der Ortsvermittlungsstelle $LE_T$, da diese für die nicht konzentrierenden V5.1-Schnittstellen in der Regel eine interne Konzentration vorsehen wird. Alternativ kann jedoch ebenfalls die wesentlich günstigere, dem Fallbeispiel 2 entsprechende dynamische Durchschaltung der Sprachkanäle durch die Ortsvermittlungsstelle $LE_T$ realisiert werden. Im Gegensatz dazu wird hierbei jedoch keine Durchschaltung von Sprachkanälen im Teilnehmerzugangsnetz AN benötigt. Eine feste Durchschaltung eines B-Kanales des Teilnehmers TLN auf ein festes Ziel (NUC) muß jedoch in der Ortsvermittlungsstelle $LE_T$ ebenfalls (wie im Fallbeispiel 2 bereits beschrieben) unterstützt werden. In jedem Falle ist auch in diesem Fallbeispiel wiederum der Zugriff auf die Tabelle T zur Umsetzung der logischen Adresse in der Ortsvermittlungsstelle $LE_T$ erforderlich.

Im folgenden wird die Behandlung von D-Kanal-Paketdaten beschrieben, die zwischen einem Teilnehmer TLN und der Ortsvermittlungsstelle $LE_B$ übertragen werden sollen. Dabei gilt dies für ISDN-Teilnehmer TLN mit Paketdatenberechtigung. Die Paketdaten PD vom Teilnehmer TLN werden in einer peripheren Einrichtung LTG oder einem zentralen Protocol Handler PRH der Ortsvermittlungsstelle $LE_T$, welcher den Paketnetzzugang realisiert, an der logischen, auf der V5-Schnittstelle $V_T$ gültigen Adresse erkannt. Durch die administrativ in der Ortsvermittlungsstelle $LE_T$ zu pflegende Tabelle T wird die logische Adresse des Teilnehmers TLN auf der V5-Schnittstelle $V_T$ umgesetzt auf eine logische Adresse der V5-Schnittstelle $V_B$. Weiterhin wird aus oder mit Hilfe der Tabelle T die Nummer der V5-Schnittstelle $V_B$ und der für die Paketdaten des Teilnehmers TLN zugeordneten C-Kanal der V5-Schnittstelle $V_B$ ermittelt. Die vom Teilnehmer TLN erhaltenen Paketdaten PD werden abweichend von der üblichen Behandlung nicht in Richtung Paketnetz weitergeleitet, sondern an die periphere Einrichtung LTG, die den C-Kanal terminiert, welcher die Paketdaten des Teilnehmers TLN auf der Schnittstelle zwischen der Ortsvermittlungsstelle $LE_T$ und der Ortsvermittlungsstelle $LE_B$ transportiert, weitergeleitet. Hierzu wird ein sogenanntes frame switching in der Ortsvermittlungsstelle $LE_T$ durchgeführt. In dieser den C-Kanal aktuell terminierenden peripheren Einrichtung LTG werden die Paketdaten PD mit der für den Teilnehmer TLN auf der V5-Schnittstelle $V_B$ gültigen logischen Adresse in Richtung der Ortsvermittlungsstelle $LE_B$ ausgegeben.

In analoger Weise wird die Übetragung von D-Kanal-Paketdaten von der Ortsvermittlungsstelle $LE_B$ in Richtung Teilnehmer TLN gesteuert. Die von der Ortsvermittlungsstelle $LE_B$ kommenden Paketdaten PD werden in einer peripheren Einrichtung LTG oder einem zentralen Protocol Handler der Ortsvermittlungsstelle $LE_T$, welcher den Paketnetzzugang realisiert, an ihrer logischen Adresse der V5-Schnittstelle $V_B$ erkannt. Durch die administrativ in der Ortsvermittlungsstelle $LE_T$ zu pflegenden Tabelle T wird die logische Adresse des Teilnehmers TLN auf der V5-Schnittstelle $V_B$ umgesetzt auf eine logische Adresse auf V5-Schnittstelle $V_T$. Weiterhin wird die Nummer der V5-Schnittstelle und der für die Paketdaten des Teilnehmers TLN zugeordneten C-Kanal der V5-Schnittstelle $V_T$ zt aus oder mit Hilfe der Tabelle T ermittelt.

Die von der Ortsvermittlungsstelle $LE_B$ erhaltenen Paketdaten werden an die periphere Einrichtung LTG weitergeleitet, die den C-Kanal terminiert, welcher die Paketdaten des Teilnehmers TLN auf der Schnittstelle zwischen der Ortsvermittlungsstelle $LE_T$ und dem Teilnehmeranschlußnetzwerk AN transportiert. Hierzu wird ein sogenanntes frame switching in der Ortsvermittlungsstelle $LE_T$ durchgeführt. In der diesen C-Kanal aktuell terminierenden peripheren Einrichtung LTG werden die Paketdaten mit der für den Teilnehmer TLN auf der V5 Schnittstelle $V_T$ gültigen logischen Adresse ausgegeben in Richtung Teilnehmeranschlußnetzwerk AN .

Steuerung der Schicht 1 von ISDN Teilnehmer TLN:

Mit Beginn der ersten bzw. Ende der letzten ISDN Verbindung (Leitungsvermittelt oder D-Kanal-Paketdatenverbindung) werden die zur Aktivierung / Deaktivierung des Layer 1 des Teilnehmers TLN im Teilnehmeranschlußnetzwerk AN notwendigen Aufträge der Ortsvermittlungsstelle $LE_B$ durch die Ortsvermittlungsstelle $LE_T$ an das Teilnehmeranschlußnetzwerk AN weitergereicht. Entsprechendes gilt für Ausführungsquittungen des Teilnehmeranschlußnetzwerkes AN, welche durch die Ortsvermittlungsstelle $LE_T$ an die Ortsvermittlungsstelle $LE_B$ weitergeleitet werden (Jeweils V5 Control Protocol Nachrichten).

Fehlerbehandlung in der Ortsvermittlungsstelle $LE_T$:

Im Falle von Ausfall-/Wiederverfügbarkeitssituationen im Teilnehmeranschlußnetzwerk AN oder auf der V5-Schnittstelle $V_T$ generiert die Ortsvermittlungsstelle $LE_T$ für alle betroffenen Teilnehmer TLN auf allen für diese Teilnehmermenge relevanten V5-Schnittstellen portspezifische Ausfall-/Verfügbarkeitsmeldungen an die zugehörigen Ortsvermittlungsstellen $LE_B$ (Port Control Protocol) der weietern Netzbetreiber. Hierbei ist der mehrfache Zugriff auf die Tabelle T zur Umsetzung der betroffenen logischen (EFA / L3) Adressen in der Ortsvermittlungsstelle $LE_T$ erforderlich. Im Falle von Ausfall-/Wiederverfügbarkeitssituationen in der Ortsvermittlungsstelle $LE_B$ oder auf der V5- Schnittstelle $V_B$ generiert die Ortsvermittlungsstelle $LE_T$ für alle betroffenen Teilnehmer TLN auf allen für diese Teilnehmermenge relevanten V5-Schnittstellen $V_T$ portspezifische Ausfall-/Verfügbarkeitsmeldungen an die zugehörigen Teilnehmeranschlußnetzwerke AN (Port Control Protocol). Hierbei ist der mehrfache Zugriff auf die Tabelle T zur Umsetzung der betroffenen logischen Adressen in der Ortsvermittlungsstelle $LE_T$ erforderlich.

Will der Teilnehmer TLN Kunde eines anderen öffentlichen Netzbetreibers werden, so wird er per administrativem Eingriff in der Ortsvermittlungsstelle $LE_T$ blockiert und damit im Teilnehmeranschlußnetzwerk AN (kurzzeitig) und in der bisherigen Ortsvermittlungsstelle $LE_B$ (permanent) deaktiviert (jeweils über das V5 Port Control Protocol). In der neuen, vermittlungstechnisch zuständigen Ortsvermittlungsstelle $LE_B$ ist er bereits eingerichtet und einer EFA / L3 Adresse zugeordnet. Diese wird in die Tabelle T der Ortsvermittlungsstelle $LE_T$ zusammen mit der zugehörigen V5-Schnittstelle und den zugehörigen C-Kanälen eingebracht. Sodann wird der Teilnehmer TLN im Teilnehmeranschlußnetzwerk AN und in der neuen Ortsvermittlungsstelle $LE_B$ (permanent) entblockiert (jeweils über das V5 Port Control Protocol).

Die voranstehend genannten vermittlungstechnische Funktion, die Paketdatenfunktion, die Maintenance Funktion sowie die administrative Funktion sind per Software und/oder Firmware realisierte Bestandteile des Verfahrens, welche die bestehende Funktionalität der Ortsvermittlungsstelle $LE_T$ rein additiv ergänzen.

**Patentansprüche**

1. Verfahren zur Anbindung von Teilnehmern an die Kommunikationssysteme verschiedener Netzbetreiber, mit einer Mehrzahl von Teilnehmern (TLN), die physikalisch einem Netzbetreiber (N1) und gegebenenfalls vermittlungstechnisch wenigstens einem weiteren Netzbetreiber (N2) über genormte Schnittstellen ($V_T$, $V_B$) zugeordnet sind, **dadurch gekennzeichnet,** daß Signalisierungsnachrichten (SIG) und Sprachinformationen (SP) des vermittlungstechnisch dem weiteren Netzbetreiber (N2) zugeordneten Teilnehmers (TLN) transparent durch die wenigstens eine Ortsvermittlungsstelle ($LE_T$) des physikalisch zugeordneten Netzbetreibers (N1) an eine Ortsvermittlungsstelle ($LE_B$) des wenigstens einen weiteren Netzbetreibers (N2) durchgereicht werden.

2. Verfahren nach Anspruch 1, **dadurch gekennzeichnet,** daß die genormten Schnittstellen V5-Schnittstellen, insbesondere V5.2-Schnittstellen sind.

3. Verfahren nach Anspruch 1 oder 2, **dadurch gekennzeichnet,** daß in der Ortsvermittlungsstelle ($LE_T$) des einen Netzbetreibers (N1) eine den Signalisierungsnachrichten mitgegebene logische Adresse daraufhin untersucht wird, ob der Teilnehmer (TLN) vermittlungstechnisch einem der weiteren Netzbetreiber (N2) zugeordnet ist.

4. Verfahren nach Anspruch 1 bis 3, **dadurch gekennzeichnet,** daß in einer Tabelle (T) der Ortsvermittlungsstelle ($LE_T$) des einen Netzbetreibers (N1) eine Umsetzung zwischen der logischen, auf der zwischen Teilnehmer und Ortsvermittlungsstelle ($LE_T$) des physikalisch zugeordneten Netzbetreibers (N1) gültigen Adresse und einer Adresse erfolgt, unter der die Signalisierungsnachrichten der genormten Schnittstelle ($V_B$) übergeben werden, über die die Ortsvermittlungsstelle ($LE_B$) des wenigstens einen der weiteren Netzbetreiber (N2) erreichbar ist.

5. Verfahren nach einem der vorstehenden Ansprüche, **dadurch gekennzeichnet,** daß von einem bzw. an einen Teilnehmer (TLN) gesendete Paketdaten (PD) über die periphere Einrichtung (LTG) geleitet werden, die den C-Kanal terminiert, welcher die Paketdaten des Teilnehmers (TLN) auf der Schnittstelle zwischen der Ortsvermittlungsstelle ($LE_T$) und der Ortsvermittlungsstelle ($LE_B$) transportiert.

6. Verfahren nach einem der vorstehenden Ansprüche, **dadurch gekennzeichnet,** daß im Falle von Ausfall-/Wiederverfügbarkeitssituationen im Teilnehmeranschlußnetzwerk (AN) oder auf der V5-Schnittstelle ($V_T$) die Ortsvermittlungsstelle ($LE_T$) für alle betroffenen Teilnehmer (TLN) auf allen für diese Teilnehmermenge relevanten V5-Schnittstellen portspezifische Ausfall-/Verfügbarkeitsmeldungen an die zugehörigen Ortsvermittlungsstellen ($LE_B$)generiert und daß im Falle von Ausfall- /Wiederverfügbarkeitssituationen auf der V5-Schnittstelle ($V_B$) die die Ortsvermittlungsstelle ($LE_T$) für alle betroffenen Teilnehmer (TLN) auf allen für diese Teilnehmermenge relevanten V5-Schnittstellen portspezifische Ausfall-/Verfügbarkeitsmeldungen an die zugehörigen Teilnehmeranschlußnetzwerke (AN) generiert.

7. Verfahren nach einem der vorstehenden Ansprüche, **dadurch gekennzeichnet,** daß die Mehrzahl von Teilnehmern (TLN), die physikalisch einem Netzbetreiber (N1) und vermittlungstechnisch wenigstens einem weiteren Netzbetreiber (N2) zugeordnet sind, an einer Mehrzahl von Teilnehmeranschlußnetzwerken (AN) und / oder über eine Mehrzahl von genormten Schnittstellen ($V_T$) die Ortsvermittlungsstelle ($LE_T$) des physikalisch zugeordneten Netzbetreibers (N1) erreicht und bzgl. Signalisierungsinformation, Sprachinformation und Paketdaten einer oder mehreren genormten Schnittstellen ($V_B$) an der Ortsvermittlungsstelle ($LE_B$) zugeordnet ist.

8. Verfahren nach einem der vorstehenden Ansprüche, **dadurch gekennzeichnet,** daß an der Ortsvermittlungsstelle ($LE_T$) mehrere genormte Schnittstellen ($V_B$) zu einer Mehrzahl von Ortsvermittlungsstellen ($LE_B$) unterschiedlicher, weitere Netzbetreiber (N2) existieren.

9. Verfahren nach einem der vorstehenden Ansprüche,
**dadurch gekennzeichnet,**
daß die Mehrzahl der Teilnehmer (TLN) auch Teilnehmer enthält, die nicht über genormte V5-Schnittstellen an der Ortsvermittlungsstelle ($LE_T$) angeschlossen sind und deren Signalisierung und Paketdateninformation in geeigneter Weise in der Ortsvermittlungsstelle ($LE_T$) umgesetzt wird.

10. Verfahren nach einem der vorstehenden Ansprüche,
**dadurch gekennzeichnet,**
daß Signalisierung und / oder Paketdaten der Mehrzahl der Teilnehmer (TLN) bereits im (AN) auf feste, nur für die vermittlungstechnisch dem weiteren Netzbetreiber (N2) zugeordneten Teilnehmer reservierte C-Kanäle geleitet werden, die via internem Nachrichtenverteilsystem der Ortsvermittlungsstelle ($LE_T$) oder via Sprachkanaldurchschaltung durch die Ortsvermittlungsstelle ($LE_T$) als Gesamtheit auf einen C-Kanal der V5-Schnittstelle ($V_B$) geschaltet werden.

11. Verfahren nach einem der vorstehenden Ansprüche,
**dadurch gekennzeichnet,**
daß die Ortsvermittlungsstelle ($LE_T$) eine Verkehrsmessung im Sinne einer Zählung von Anzahl und/oder Dauer von Sprachkanaldurchschaltungen und/oder Anzahl und Länge übertragener Paketdaten und/oder Signbalisierungsnachrichten zwischen der Mehrzahl der Teilnehmer (TLN) und dem weiteren Netzbetreiber (N2) durchführt als Basis zur Kostenabrechnung zwischen den Netzbetreibern (N1, N2).

12. Verfahren nach einem der vorstehenden Ansprüche,
**dadurch gekennzeichnet,**
daß die Tabelle (T) der Ortsvermittlungsstelle ($LE_T$) dahingehend durch Bedienereingriff administriert werden kann, daß ein Teilnehmer (TLN) wechselweise vermittlungstechnisch dem Netzbetreiber (N1) oder einem der weiteren Netzbetreiber (N2) zugeordnet werden kann, wobei in letzterem Falle die Schnittstelle ($V_B$), sowie die zugeordneten C-Kanäle und die auf der Schnittstelle ($V_B$) gültige logische Adresse frei zugeordnet werden können.

# FIG 1

# FIG 2